# EUROPÄISCHE PATENTSCHRIFT

(11) **EP 4 275 016 B1**
(45) Veröffentlichungstag und Bekanntmachung des Hinweises auf die Patenterteilung: **01.04.2026**
(21) Anmeldenummer: 21836390.1
(22) Anmeldetag: 08.12.2021
(51) Int. Cl.: G01D 5/14, G01P 3/488, F02D 41/00

(54) **GEBERRAD FÜR EINE BRENNKRAFTMASCHINE, BRENNKRAFTMASCHINE SOWIE VERFAHREN ZUM BETREIBEN EINER BRENNKRAFTMASCHINE**
SENSOR WHEEL FOR AN INTERNAL COMBUSTION ENGINE, INTERNAL COMBUSTION ENGINE, AND METHOD FOR OPERATING AN INTERNAL COMBUSTION ENGINE
ROUE DE CAPTEUR POUR UN MOTEUR À COMBUSTION INTERNE, MOTEUR À COMBUSTION INTERNE ET PROCÉDÉ PERMETTANT DE FAIRE FONCTIONNER UN MOTEUR À COMBUSTION INTERNE

(30) Priorität: 11.01.2021 DE 102021100286
(43) Veröffentlichungstag der Anmeldung: 15.11.2023
(73) Patentinhaber: AUDI AG, 85057 Ingolstadt (DE)
(72) Erfinder: KARCHER, Rolf, 74172 Neckarsulm (DE)
(74) Vertreter: Dietz, Christopher Friedrich
(86) Internationale Anmeldenummer: PCT/EP2021/084689
(87) Internationale Veröffentlichungsnummer: WO 2022/148588

(56) Entgegenhaltungen:
- WO-A1-2020/099625
- US-A- 5 460 134
- US-A- 5 767 394
- US-A1- 2003 000 498

## Beschreibung

Die Erfindung betrifft ein Geberrad für eine Brennkraftmaschine, mit sechs Indikatorelementen, die in Umfangsrichtung bezüglich einer Drehachse des Geberrads beabstandet voneinander an einem Grundkörper des Geberrads angeordnet sind, wobei gleichsinnig angeordnete Flanken der Indikatorelemente in Umfangsrichtung äquidistant zueinander angeordnet sind, wobei die Indikatorelemente jeweils eine von drei unterschiedlichen Indikatorelementerstreckungen in Umfangsrichtung aufweist, wobei jeweils zwei der Indikatorelemente dieselbe der Indikatorelementerstreckungen aufweisen. Die Erfindung betrifft weiterhin eine Brennkraftmaschine sowie ein Verfahren zum Betreiben einer Brennkraftmaschine.

Aus dem Stand der Technik ist beispielsweise die Druckschrift DE 41 41 713 A1 bekannt. Diese beschreibt eine Geberanordnung zur Zylindererkennung bei einer Brennkraftmaschine, mit einem Kurbelwellengeber mit einer Inkrementscheibe mit einer Bezugsmarke und einem Nockenwellengeber mit langen und kurzen Segmenten sowie kurzen und langen Zwischenräumen zwischen den Segmenten. Durch Kombination der von den beiden Gebern gelieferten Pulsfolgen lässt sich eine eindeutige Kombination von High- und Lo-Phasen erzeugen, die eine eindeutige und schnelle Zylinder- und Zylindergruppenerkennung ermöglicht. Der Beginn eines sequenziellen Einspritzsystems erfolgt daraufhin so, dass alle die Zylinder, die noch "vor Einlass schließt" bedient werden können, simultan eingespritzt werden. Bei einem Defekt des Kurbelwellengebers ist ein Notlauf unter Verwendung des Nockenwellensignals möglich, da die Kombination der High-Lo-Phasen eine Zylindererkennung ermöglichen und die in winkelfestem Abstand erzeugten Rückflanken des Nockenwellensignals als Triggermarken für die Zündung oder Einspritzung dienen können.

Die Druckschrift WO 2020/099625 A1 beschreibt ein Geberrad für eine Nockenwelle, mit einem kreisförmigen Grundkörper, der zwei gegenüberliegende Stirnseiten aufweist, und mit wenigstens sechs in Umfangsrichtung des Grundkörpers verteilt angeordneten Zähnen, wobei jeder Zahn zwei Zahnflanken aufweist, denen in Abhängigkeit von einer Drehrichtung des Geberrads eine steigende Flanke und eine fallende Flanke zugeordnet ist. Das Geberrad weist eine Asymmetrie in Drehrichtung auf, wobei die sechs Zähne derart geformt sind, dass das Geberrad in Anbetracht derselben Stirnseite und derselben Drehrichtung vier Flanken einer ersten steigenden oder fallenden Art, die um 90° versetzt zueinander vorliegen, sowie entsprechend sechs Flanken einer zweiten entsprechend steigenden oder fallenden Art, die um 60° versetzt zueinander vorliegen, aufweist.

Aus dem Stand der Technik sind weiterhin die Druckschriften US 5 767 394 A, US 5 460 134 A und US 2003/000498 A1 bekannt.

Es ist Aufgabe der Erfindung, ein Geberrad für eine Brennkraftmaschine vorzuschlagen, welches gegenüber bekannten Geberrädern Vorteile aufweist, insbesondere eine äußerst präzise Bestimmung einer Drehwinkelstellung des Geberrads ermöglicht, vorzugsweise eine maximale Signalauflösung bei möglichst genauer Ermittlung der Drehwinkelstellung und kurzen Schnellstartzeiten sicherstellt.

Dies wird erfindungsgemäß mit einem Geberrad für eine Brennkraftmaschine mit den Merkmalen des Anspruchs 1 erreicht. Dabei ist vorgesehen, dass zumindest zwei unmittelbar benachbarte der Indikatorelemente ein Indikatorelementpaar bilden und diese der Indikatorelementerstreckungen aufweisen.

Vorteilhafte Ausgestaltungen mit zweckmäßigen Weiterbildungen der Erfindung sind in den abhängigen Ansprüchen angegeben.

Das Geberrad ist vorzugsweise Bestandteil der Brennkraftmaschine, kann jedoch selbstverständlich auch separat von dieser vorliegen. Das Geberrad ist dazu vorgesehen und ausgestaltet, eine Drehwinkelstellung des Geberrads zu ermitteln beziehungsweise eine solche Ermittlung auf einfache Art und Weise zu ermöglichen. Zur Ermittlung der Drehwinkelstellung wird ein entsprechender Sensor verwendet. Bevorzugt ist das Geberrad mit einer Welle der Brennkraftmaschine, insbesondere einer Nockenwelle der Brennkraftmaschine, antriebstechnisch verbunden und mit ihr gemeinsamen drehbar gelagert. In diesem Fall dient das Geberrad dem Ermitteln einer Drehwinkelstellung dieser Welle.

Das Geberrad ist um die Drehachse drehbar beziehungsweise drehbar gelagert. Es verfügt über die sechs Indikatorelemente, bevorzugt über genau sechs beziehungsweise nur sechs Indikatorelemente. Die Indikatorelemente sind in Umfangsrichtung bezüglich der Drehachse beabstandet voneinander an dem Grundkörper des Geberrads angeordnet. Bevorzugt erstrecken sie sich jeweils ausgehend von dem Grundkörper in radialer Richtung nach außen. Der Grundkörper ist in diesem Fall bevorzugt rund beziehungsweise kreiszylinderförmig.

In Umfangsrichtung liegen zwischen den Indikatorelementen Zwischenräume vor, sodass die Indikatorelementen in Umfangsrichtung beabstandet zueinander angeordnet sind. Hierbei liegt zwischen jeweils zwei der Indikatorelemente ein solcher Zwischenraum vor beziehungsweise liegt zwischen jeweils zwei der Zwischenräume eines der Indikatorelemente vor. In anderen Worten sind die Indikatorelementen und die Zwischenräume in Umfangsrichtung abwechselnd angeordnet.

Der Sensor, mittels welchem die Drehwinkelstellung des Geberrads beziehungsweise der mit diesem gekoppelten Welle ermittelt wird, ist zur Erfassung der Indikatorelemente und/oder der Zwischenräume vorgesehen und ausgestaltet. Beispielsweise liefert der Sensor bei Überdeckung mit einem der Indikatorelemente einen ersten Signalpegel und bei Überdeckung mit einer der zwischen den Indikatorelementen vorliegenden Zwischenräume einen von dem ersten Signalpegel verschiedenen zweiten Signalpegel. Unter der Überdeckung ist zu verstehen, dass der Sensor und das jeweilige Indikatorelements beziehungsweise der jeweilige Zwischenraum in Umfangsrichtung bezüglich der Drehachse gesehen an derselben Stelle angeordnet sind.

Der Sensor kann grundsätzlich beliebig ausgestaltet sein. Beispielsweise liegt er in Form eines Hall-Sensors oder dergleichen vor. Der Hall-Sensor weist bevorzugt lediglich beziehungsweise genau ein Hallelement auf. Alternativ kann er auch über zwei Hallelemente verfügten. Ebenso kann der Sensor als Induktivgeber oder magnetoresistiver Geber ausgestaltet sein. In jedem Fall sind der Sensor, die Indikatorelemente und die Zwischenräume derart ausgestaltet, dass die Indikatorelemente mittels des Sensors von den Zwischenräumen unterscheidbar sind. Unter den Zwischenräumen ist im Übrigen nicht zu verstehen, dass diese notwendigerweise leer sind beziehungsweise als Hohlräume beziehungsweise Lufträume vorliegen. Vielmehr unterscheiden sich die Zwischenräume lediglich insoweit von den Indikatorelementen, dass sie mittels des Sensors von diesen unterschieden werden können.

Zwar kann es grundsätzlich vorgesehen sein, dass die Indikatorelementen in Form von Zähnen vorliegen, welche von dem Grundkörper ausgehen und sich in radialer Richtung ausgehend von diesem nach außen erstrecken, wohingegen die Zwischenräume als Hohlräume beziehungsweise Lufträume ausgestaltet sind. Es kann jedoch auch vorgesehen sein, dass die Indikatorelemente aus einem ersten Material bestehen oder dieses erste Material aufweisen, wohingegen in den Zwischenräumen ein von dem ersten Material verschiedenes zweites Material vorliegt.

Um eine zuverlässige und gleichmäßige Ermittlung der Drehwinkelstellung des Geberrads zu ermöglichen, sollen die gleichsinnig angeordneten Flanken der Indikatorelemente in Umfangsrichtung äquidistant zueinander angeordnet sein. Die Flanken der Indikatorelemente begrenzen diese in Umfangsrichtung. Insbesondere weist jedes Indikatorelement in Umfangsrichtung gesehen zwei voneinander beabstandeten Flanken auf, sodass sich jedes der Indikatorelemente jeweils von einer ersten Flanke bis hin zu einer zweiten Flanke erstreckt. Die erste Flanke ist beispielsweise eine in Drehrichtung vorauslaufende Vorlaufflanke und die zweite Flanke eine in Drehrichtung nachlaufende Nachlaufflanke. Jede der Flanken trennt eines der Indikatorelemente in Umfangsrichtung von einem der Zwischenräume ab. Das bedeutet, dass einerseits jeder der Flanken das jeweilige Indikatorelement und andererseits der Flanke einer der Zwischenräume angeordnet ist.

Unter den gleichsinnig angeordneten Flanken sind Flanken der Indikatorelemente zu verstehen, welche in Umfangsrichtung auf derselben Seite der Indikatorelemente vorliegen. Beispielsweise stellen die Vorlaufflanken der Indikatorelemente die gleichsinnig angeordneten Flanken dar. Alternativ können die gleichsinnig angeordneten Flanken jedoch auch die Nachlaufflanke der Indikatorelemente sein. Es versteht sich also von selbst, dass die Indikatorelemente jeweils zwei gleichsinnig angeordnete Flanken aufweisen, nämlich gleichsinnig angeordnete erste Flanken und von den ersten Flanken verschiedene, gleichsinnig angeordnete zweite Flanken, wobei jedes der Indikatorelemente jeweils eine der ersten Flanken und eine der zweiten Flanken aufweist beziehungsweise jeweils von diesen begrenzt ist. Die ersten Flanken oder die zweiten Flanken sind äquidistant zueinander angeordnet, für die jeweils anderen Flanken, also die zweiten Flanken oder die ersten Flanken, ist dies nicht notwendig beziehungsweise nicht der Fall.

Unter der äquidistanten Anordnung der Flanken ist zu verstehen, dass diese in Umfangsrichtung die gleichen Abstände zueinander aufweisen beziehungsweise jeweils unmittelbar benachbarte der gleichsinnig angeordneten Flanken jeweils mit dem gleichen einheitlichen Abstand angeordnet sind. Anders ausgedrückt sind die gleichsinnig angeordneten Flanken in Umfangsrichtung gleichmäßig verteilt an dem Geberrad angeordnet. Diese Ausgestaltung des Geberrads ermöglicht eine präzise und gleichmäßige Ermittlung der Drehwinkelstellung des Geberrads.

Während eines Betriebs der Brennkraftmaschine ist es häufig notwendig, die absoluten Drehwinkelstellung des Geberrads möglichst rasch zu bestimmen.

Zur Ermittlung der absoluten Drehwinkelstellung des Geberrads ist es beispielsweise vorgesehen, eines der Indikatorelemente zu entfernen oder zumindest mit einer von den weiteren Indikatorelementen unterschiedlichen Erstreckung in Umfangsrichtung bezüglich der Drehachse auszugestalten, sodass bei einem Vorbeilaufen des Indikatorelements an dem Sensor auf das Vorliegen einer bestimmten absoluten Drehwinkelstellung geschlossen werden kann. Die weiteren Indikatorelemente können anschließend dazu genutzt werden, eine relative Veränderung der Drehwinkelstellung gegenüber dieser bestimmten Drehwinkelstellung zu ermitteln und aus dieser unter Verwendung der bestimmten Drehwinkelstellung die jeweils vorliegende absolute Drehwinkelstellung zu ermitteln.

Eine solche Ausgestaltung des Geberrads führt jedoch dazu, dass - in Abhängigkeit von der momentanen Drehwinkelstellung des Geberrads - eine umfangreiche Drehbewegung des Geberrads notwendig ist, bis dessen absolute Drehwinkelstellung ermittelt ist, nämlich bis zu der Drehwinkelstellung, in welcher das Indikatorelement beziehungsweise dessen Fehlen erfasst werden kann. Um den Vorgang der Ermittlung der absoluten Drehwinkelstellung zu beschleunigen, wurde es vorgeschlagen, für die Indikatorelemente zwei unterschiedliche Indikatorelementerstreckungen in Umfangsrichtung zu verwenden. Aus den unterschiedlichen Indikatorelementerstreckungen kann während der Drehbewegung des Geberrads rascher auf die absolute Drehwinkelstellung geschlossen werden.

Bei Versuchen der Anmelderin hat sich überraschenderweise herausgestellt, dass mit der Verwendung eines Geberrads mit sechs Indikatorelementen und drei unterschiedlichen Indikatorelementerstreckungen ein Optimum an Genauigkeit bei der Ermittlung der absoluten Drehwinkelstellung erreicht beziehungsweise die absolute Drehwinkelstellung besonders rasch ermittelt wird. Dies rührt daher, dass der verwendete Sensor eine Auflösung von 20° ermöglicht. Das bedeutet, dass mittels des Sensors Indikatorelemente und Zwischenräume mit einer Erstreckung von mindestens 20° in Umfangsrichtung ohne weiteres zuverlässig erfasst werden. Der Sensor ist hierzu entsprechend ausgestaltet.

Das Geberrad ist derart ausgeführt, dass jede der drei unterschiedlichen Indikatorelementerstreckungen wenigstens für eines der Indikatorelemente verwendet wird. Erfindungsgemäß finden die Indikatorelementerstreckungen jedoch für jeweils gleich viele der Indikatorelemente Verwendung, sodass jeweils zwei der Indikatorelemente dieselbe Indikatorelementerstreckung aufweisen. Bevorzugt ist das Geberrad derart ausgestaltet, dass die Indikatorelemente sowie die zwischen diesen vorliegenden Zwischenräume jeweils eine Erstreckung in Umfangsrichtung bezüglich der Drehachse von mindestens 15°, mindestens 17,5° oder mindestens 20° aufweisen. Besonders bevorzugt betragen die Abmessungen mindestens 18°, mindestens 18,5° oder mindestens 19°.

Zusätzlich oder alternativ ist es vorgesehen, dass sich die drei unterschiedlichen Indikatorelementerstreckungen untereinander jeweils um einen Faktor von mindestens 1,25, mindestens 1,5 oder mindestens 1,75 unterscheiden. Beispielsweise weisen die unterschiedlichen Indikatorelementerstreckungen folgende Basiswerte auf: 20°, 40° und 60°. Die Indikatorelementerstreckungen können diesen Ausgangswerten unmittelbar entsprechen. Es kann jedoch auch vorgesehen sein, dass die Indikatorelementerstreckungen den Ausgangswerten jeweils abzüglich eines konstanten Werts entsprechen. Dieser konstante Wert beträgt beispielsweise mindestens 1,6°, mindestens 1,7° oder mindestens 1,8°. Somit ergeben sich beispielsweise die folgenden Werte für die unterschiedlichen Indikatorelementerstreckungen: 18,4°, 28,4° und 38,4° oder 18,3°, 28,3° und 38,3° oder 18,2°, 28,2° und 38,2°. Durch die Berücksichtigung dieses Offsetwinkels kann beispielsweise ein Offset des Sensors berücksichtigt werden. Die genannten Werte haben sich dafür als ideal herausgestellt.

Die Erfindung sieht vor, dass zumindest zwei unmittelbar benachbarte der Indikatorelemente ein Indikatorelementpaar bilden und dieselbe der Indikatorelementerstreckungen aufweisen. Unter den unmittelbar benachbarten Indikatorelementen sind solche der Indikatorelemente zu verstehen, zwischen welchen lediglich einer der Zwischenräume vorliegt. Einerseits des Zwischenraums liegt also eines der Indikatorelemente des Indikatorelementpaars und andererseits des Zwischenraums ein anderes Indikatorelements des Indikatorelementpaars vor. Die Indikatorelemente des Indikatorelementpaars weisen identische Indikatorelementerstreckungen auf, sodass also die Indikatorelementerstreckungen der Indikatorelemente gleich genau einem der drei unterschiedlichen Indikatorelementerstreckungen sind.

Besonders bevorzugt weisen jeweils höchstens zwei unmittelbar aufeinanderfolgende der Indikatorelemente die gleichen Indikatorelementerstreckungen auf. Entsprechend ist bevorzugt das Indikatorelementpaar in Umfangsrichtung von Indikatorelementen eingefasst, welche von der Indikatorelementerstreckung des Indikatorelementpaars abweichende Indikatorelementerstreckungen aufweisen. Vorzugsweise liegen wenigstens zwei Indikatorelementpaare vor, besonders bevorzugt genau zwei Indikatorelementpaare. Das bedeutet, dass wenigstens zwei der Indikatorelemente, welche dieselbe der drei unterschiedlichen Indikatorelementerstreckungen aufweisen, in Umfangsrichtung beidseits jeweils wenigstens eines der anderen Indikatorelemente zwischen sich aufnehmen. Eine solche Ausgestaltung und Anordnung der Indikatorelemente ermöglicht eine besonders rasche Ermittlung der absoluten Drehwinkelstellung des Geberrads, bei gleichzeitig minimaler Varianz.

Eine Weiterbildung der Erfindung sieht vor, dass in Umfangsrichtung zwischen den Indikatorelementen Zwischenräume vorliegen, die in Umfangsrichtung jeweils eine von drei unterschiedlichen Zwischenraumerstreckungen aufweisen. Für die Zwischenräume gilt insoweit das für die Indikatorelemente Gesagte analog. Jeder der Zwischenräume weist eine Zwischenraumerstreckung in Umfangsrichtung auf, wobei die Zwischenraumerstreckung jedes der Zwischenräume genau einer der drei unterschiedlichen Zwischenraumerstreckungen entspricht. Jede der drei unterschiedlichen Zwischenraumerstreckungen ist zumindest einem der Zwischenräume zugeordnet, bevorzugt jedoch mehreren der Zwischenräume. Besonders bevorzugt verteilen sich die drei unterschiedlichen Zwischenraumerstreckungen gleichmäßig auf die Zwischenräume, sodass jeweils zwei der Zwischenräume mit identischen Zwischenraumerstreckungen ausgestaltet sind.

Analog zu den Ausführungen für die Indikatorelemente können jeweils zwei der Zwischenräume ein Zwischenraumpaar bilden. Die Zwischenräume eines solchen Zwischenraumpaars nehmen eines der Indikatorelemente zwischen sich auf, sodass einer der Zwischenräume unmittelbar einerseits an dieses Indikatorelement und ein anderer der Zwischenräume unmittelbar andererseits an dieses Indikatorelement angrenzt. Die Zwischenräume des Zwischenraumpaars weisen dieselbe der Zwischenraumerstreckungen auf. Wiederum liegen vorzugsweise mindestens zwei, insbesondere genau zwei, Zwischenraumpaare vor. In letzterem Fall liegen zumindest zwei Zwischenräume, welche identische Zwischenraumerstreckungen aufweisen, derart an dem Geberrad vor, dass beiderseits jeweils wenigstens ein anderer der Zwischenräume zwischen ihnen angeordnet ist. Auch diese Ausgestaltung ermöglicht eine rasche und präzise Ermittlung der absoluten Drehwinkelstellung des Geberrads.

Eine Weiterbildung der Erfindung sieht vor, dass jeder der Zwischenräume eine Zwischenraumerstreckung in Umfangsrichtung aufweist, die in einem für alle Zwischenräume festen Verhältnis zu der jeweiligen Indikatorelementerstreckung des den entsprechenden Zwischenraum begrenzenden Indikatorelements steht, insbesondere dessen Drehrichtung des Geberrads vorauslaufenden Indikatorelements. In anderen Worten grenzt an jedes der Indikatorelemente auf derselben Seite einer der Zwischenräume an, wobei die Zwischenraumerstreckungen des Zwischenraums in dem festen Verhältnis zu der Indikatorelementerstreckung des Indikatorelements steht. Die Zwischenräume sollen in Umfangsrichtung stets auf derselben Seite der Indikatorelemente angeordnet sein. Beispielsweise sind die Zwischenräume die den Indikatorelementen jeweils in Drehrichtung des Geberrads nachlaufenden Zwischenräume. Umgekehrt läuft entsprechend das den jeweiligen Zwischenraum begrenzende Indikatorelements diesem Zwischenraum in Drehrichtung des Geberrads voraus. Hierdurch ist eine rasche Erkennung der absoluten Drehwinkelstellung realisiert.

Eine Weiterbildung der Erfindung sieht vor, dass jedes der Indikatorelemente eine in Drehrichtung vorauslaufende Vorlaufflanke und eine in Drehrichtung nachlaufende Nachlaufflanke aufweist und die äquidistant angeordneten Flanken die Vorlaufflanken sind. Jedes der Indikatorelemente wird in Umfangsrichtung beziehungsweise Drehrichtung einerseits von der jeweiligen Vorlaufflanke und andererseits von der jeweiligen Nachlaufflanke begrenzt. Die Vorlaufflanke ist in Umfangsrichtung bezüglich der Nachlaufflanke derart angeordnet, dass sie in Drehrichtung vorne liegt. Die gleichsinnig angeordneten Flanken der Indikatorelemente, welche äquidistant zueinander angeordnet sein sollen, sind die Vorlaufflanken, also die in Drehrichtung des Geberrads vorauslaufenden Flanken. Auch hierdurch wird die rasche Ermittlung der absoluten Drehwinkelstellung des Geberrads realisiert. Auch eine umgekehrte Ausgestaltung könnte - in Abhängigkeit von der Auswertung und/oder einer Ausgestaltung des die Auswertung vornehmenden Steuergeräts - selbstverständlich realisiert sein.

Eine Weiterbildung der Erfindung sieht vor, dass die Indikatorelemente in Umfangsrichtung an den folgenden Winkelpositionen ihre jeweilige Vorlaufflanke aufweisen: 0°, 60°, 120°, 180°, 240° und 300°, und dass die Indikatorelemente in Umfangsrichtung gesehen die folgenden Indikatorelementerstreckungen aufweisen: 40°, 40°, 30°, 20°, 20°, 30°. Die Vorlaufflanken der Indikatorelemente sind insoweit in Umfangsrichtung gleichmäßig verteilt an dem Geberrad ausgebildet. Die Indikatorelemente unterscheiden sich jedoch hinsichtlich der Indikatorelementerstreckungen. Für die Indikatorelemente kommen die drei folgenden unterschiedlichen Indikatorelementerstreckungen zum Einsatz: 20°, 30° und 40°.

Die Indikatorelemente sind in Umfangsrichtung derart aufeinanderfolgend angeordnet, dass die Indikatorelemente mit den größten Indikatorelementerstreckungen unmittelbar aufeinanderfolgen. Entsprechendes gilt für die Indikatorelemente mit den kleinsten Indikatorelementerstreckungen. Diejenigen Indikatorelemente, welche Indikatorelementerstreckungen aufweisen, die zwischen der den kleinsten Indikatorelementerstreckungen und den größten Indikatorelementerstreckungen liegen, sind in Umfangsrichtung beabstandet voneinander angeordnet, sodass beiderseits mindestens eines der anderen Indikatorelemente zwischen ihnen vorliegt. Die genannte Anordnung der Indikatorelemente und ihre Indikatorelementerstreckungen haben sich überraschenderweise als ideal herausgestellt.

Eine Weiterbildung der Erfindung sieht vor, dass die Indikatorelementerstreckungen der Indikatorelemente jeweils um denselben Offsetwinkel verkleinert sind. Hierunter ist zu verstehen, dass die Indikatorelemente tatsächlich nicht die bereits genannten Indikatorelementerstreckungen aufweisen, sondern in Umfangsrichtung kleiner sind. So werden die genannte Indikatorelementerstreckungen zwar als Ausgangswerte herangezogen. Diese werden jedoch jeweils um denselben Offsetwinkel verkleinert. Der Offsetwinkel beträgt beispielsweise mindestens oder genau 1,6°, mindestens oder genau 1,7° oder mindestens oder genau 1,8°, sodass sich für die drei unterschiedlichen Indikatorelementerstreckungen beispielsweise folgende Werte ergeben: 18,4°, 28,4° und 38,4° oder 18,3°, 28,3° und 38,3° oder 18,2°, 28,2° und 38,2°. Mit einer solchen Ausgestaltung des Geberrads kann auf einfache Art und Weise ein Offset des Sensors ausgeglichen werden. Entsprechend wird trotz des Offsets des Sensors eine zuverlässige Ermittlung der Drehwinkelstellung des Geberrads und insbesondere der absoluten Drehwinkelstellung des Geberrads erreicht.

Die Erfindung betrifft weiterhin eine Brennkraftmaschine, mit einer Kurbelwelle und einer antriebstechnisch an die Kurbelwelle angeschlossenen Nockenwelle, wobei mit der Kurbelwelle ein mehrere Indikatorelemente aufweisendes Kurbelwellengeberrad und mit der Nockenwelle ein sechs Indikatorelemente aufweisendes und als Nockenwellengeberrad ausgestaltetes Geberrad, insbesondere ein Geberrad gemäß den Ausführungen im Rahmen dieser Beschreibung, drehfest gekoppelt ist, und wobei die Brennkraftmaschine einen Kurbelwellengebersensor zur Erfassung der Indikatorelemente des Kurbelwellengeberrads und einen Nockenwellengebersensor zur Erfassung der Indikatorelemente des Nockenwellengeberrads aufweist, wobei gleichsinnig angeordnete Flanken der Indikatorelemente in Umfangsrichtung äquidistant zueinander angeordnet sind. Dabei ist vorgesehen, dass die Indikatorelemente des Nockenwellengeberrads jeweils eine von drei unterschiedlichen Erstreckungen in Umfangsrichtung aufweisen, wobei jeweils zwei der Indikatorelemente dieselbe der Indikatorelementerstreckungen aufweisen. Dabei ist weiterhin vorgesehen, dass zumindest zwei unmittelbar benachbarte der Indikatorelemente ein Indikatorelementpaar bilden und dieselbe der Indikatorelementerstreckungen aufweisen.

Auf die Vorteile einer derartigen Ausgestaltung der Brennkraftmaschine beziehungsweise des Geberrads wurde bereits hingewiesen. Sowohl die Brennkraftmaschine als auch das Geberrad können gemäß den Ausführungen im Rahmen dieser Beschreibung weitergebildet sein, sodass insoweit auf diese verwiesen wird.

Die Brennkraftmaschine verfügt über wenigstens zwei Wellen, nämlich über die (zumindest eine) Kurbelwelle und die (zumindest eine) Nockenwelle. Die Nockenwelle ist antriebstechnisch an die Kurbelwelle angeschlossen, sodass während eines Betriebs der Brennkraftmaschine die Nockenwelle von der Kurbelwelle angetrieben wird. Vorzugsweise liegt zwischen der Kurbelwelle und der Nockenwelle ein konstantes Übersetzungsverhältnis vor, welches bevorzugt 2:1 beträgt. Selbstredend kann die Nockenwelle über einen Nockenwellensteller an die Kurbelwelle antriebstechnisch angeschlossen sein, mittels welchem die Drehwinkelstellung der Nockenwelle gegenüber der Drehwinkelstellung der Kurbelwelle innerhalb eines bestimmten Stellwinkelbereichs einstellbar ist. Während des Verstellens weicht das Übersetzungsverhältnis vorübergehend von dem konstanten Übersetzungsverhältnis ab.

Mit der Kurbelwelle ist das Kurbelwellengeberrad und mit der Nockenwelle das Nockenwellengeberrad gekoppelt. Bevorzugt sitzt das jeweilige Geberrad unmittelbar auf der jeweiligen Welle. Das Kurbelwellengeberrad weist mehrere Indikatorelemente auf, welche mithilfe des Kurbelwellengebersensors erfassbar sind. Beispielsweise verfügt das Kurbelwellengeberrad über eine Anzahl von Indikatorelementen, welche um einen ganzzahligen Faktor, insbesondere um einen Faktor von mindestens 3, mindestens 6, mindestens 8 oder mindestens 10, größer ist als eine Anzahl der Indikatorelemente des Nockenwellengeberrads. Letzteres verfügt über die sechs Indikatorelemente, sodass das Kurbelwellengeberrad beispielsweise über mindestens 36 Indikatorelemente, mindestens 48 Indikatorelemente oder mindestens 60 Indikatorelemente verfügt. Auch eine Ausgestaltung des Kurbelwellengeberrads mit mindestens 55, mindestens 70 oder mindestens 100 kann selbstverständlich realisiert sein.

Um eine besonders hohe Auflösung der Drehwinkelstellung mittels des Kurbelwellengeberrads zu erzielen, ist dieses vorzugsweise mit einem größeren Durchmesser ausgeführt als das Nockenwellengeberrad. Beispielsweise ist der Durchmesser des Kurbelwellengeberrads mindestens 50 %, mindestens 75 % oder mindestens 100 % größer als der Durchmesser des Nockenwellengeberrads.

Eine Weiterbildung der Erfindung sieht vor, dass der Nockenwellengebersensor dazu vorgesehen und ausgebildet ist, bei Überdeckung mit einem der Indikatorelemente einen ersten Signalpegel und bei Überdeckung mit einem der zwischen den Indikatorelementen vorliegenden Zwischenräume einen von dem ersten Signalpegel verschiedenen zweiten Signalpegel zu generieren. Auf eine derartige Ausgestaltung der Brennkraftmaschine beziehungsweise des Nockenwellengebersensors wurde bereits hingewiesen. Bevorzugt ist der erste Signalpegel niedriger als der zweite Signalpegel, sodass bei einem Übergang von einem der Indikatorelemente zu einem der Zwischenräume eine steigende Signalflanke und bei einem Übergang von einem der Zwischenräume zu einem der Indikatorelemente umgekehrt eine fallende Signalflanke vorliegt. Die beschriebene Ausgestaltung der Brennkraftmaschine beziehungsweise des Sensors dient einer äußerst genauen Ermittlung der Drehwinkelstellung der Nockenwelle.

Die Erfindung betrifft zudem ein Verfahren zum Betreiben einer Brennkraftmaschine, insbesondere einer Brennkraftmaschine gemäß den Ausführungen im Rahmen dieser Beschreibung, wobei die Brennkraftmaschine über eine Kurbelwelle und eine antriebstechnisch an die Kurbelwelle angeschlossene Nockenwelle verfügt, wobei mit der Nockenwelle ein mehrere Indikatorelemente aufweisendes Kurbelwellengeberrad und mit der Nockenwelle ein sechs Indikatorelemente aufweisendes und als Nockenwellengeberrad ausgestaltetes Geberrad, insbesondere ein Geberrad gemäß den Ausführungen im Rahmen dieser Beschreibung, drehfest gekoppelt ist, und wobei die Brennkraftmaschine mittels eines Kurbelwellengebersensors die Indikatorelemente des Kurbelwellengeberrads und mittels eines Nockenwellengebersensors die Indikatorelemente des Nockenwellengeberrads erfasst, wobei gleichsinnig angeordnete Flanken der Indikatorelemente in Umfangsrichtung äquidistant zueinander angeordnet sind. Dabei ist wiederum vorgesehen, dass die Indikatorelemente des Nockenwellengeberrads jeweils eine von drei unterschiedlichen Erstreckungen in Umfangsrichtung aufweisen, wobei jeweils zwei der Indikatorelemente dieselbe der Indikatorelementerstreckungen aufweisen. Dabei ist weiterhin vorgesehen, dass zumindest zwei unmittelbar benachbarte der Indikatorelemente ein Indikatorelementpaar bilden und dieselbe der Indikatorelementerstreckungen aufweisen.

Erneut wird hinsichtlich der Vorteile und möglicher vorteilhafter Ausgestaltungen beziehungsweise Weiterbildungen auf die Ausführungen im Rahmen dieser Beschreibung verwiesen.

Bevorzugt ist es vorgesehen, dass die Drehwinkelstellung des Nockenwellengeberrads in Abhängigkeit von einem Signal des dem Kurbelwellengeberrads zugeordneten Nockenwellengebersensors ermittelt wird. Beispielsweise wird bei Vorliegen eines bestimmten Signalpegels des Nockenwellengebersensor auf eine erste Drehwinkelstellung erkannt, falls ein erster Signalpegel des Kurbelwellengebersensors vorliegt, und auf eine zweite Drehwinkelstellung, falls ein von dem erster Signalpegel abweichender zweiter Signalpegel des Kurbelwellengebersensors vorliegt.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsformen als von der Erfindung umfasst anzusehen, die in der Beschreibung und/oder den Figuren nicht explizit gezeigt und erläutert sind, jedoch aus den erläuterten Ausführungsform hervorgehen oder aus ihnen ableitbar sind.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung eines Bereichs einer Brennkraftmaschine, die über eine Nockenwelle sowie einem mit dieser gekoppelten Geberrad verfügt, sowie
- Figur 2: ein Diagramm, in welchem exemplarisch ein Signal eines Sensors aufgetragen ist, der zur Erfassung von Indikatorelementen des Geberrads vorgesehen und ausgestaltet ist.

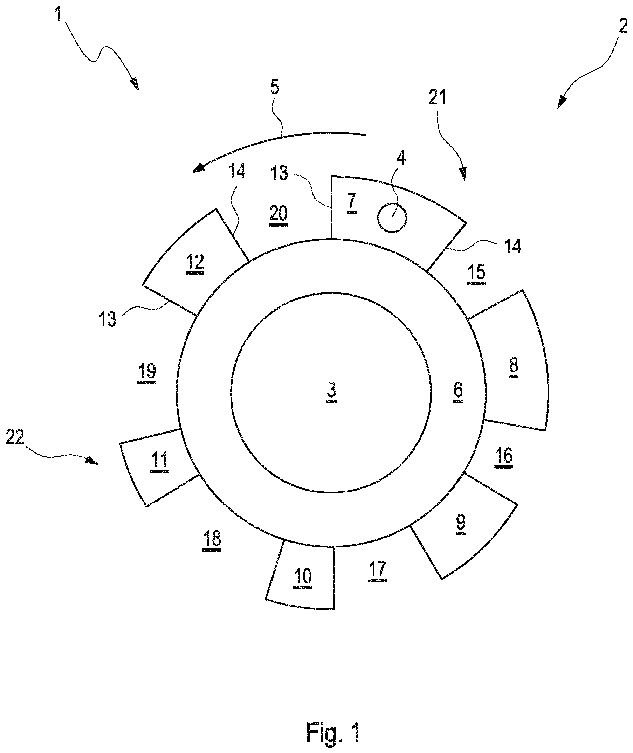

Die Figur 1 zeigt eine schematische Darstellung eines Bereichs einer Brennkraftmaschine 1, nämlich ein als Nockenwellengeberrad ausgestaltetes Geberrad 2, welches auf einer hier lediglich angedeuteten Nockenwelle 3 der Brennkraftmaschine 1 sitzt. Das Geberrad 2 arbeitet mit einem Nockenwellengebersensor 4 zusammen, um eine Drehwinkelstellung der Nockenwelle 3 zu ermitteln. Eine Drehrichtung der Nockenwelle 3 und mithin des Geberrads 2 ist durch den Pfeil 5 angedeutet. Es sei angemerkt, dass der Nockenwellengebersensor 4 und dessen Anordnung lediglich höchst schematisch dargestellt sind. Bevorzugt ist der Nockenwellengebersensor 4 abweichend von der Darstellung in radialer Richtung bezüglich einer Drehachse des Geberrads 2 weiter außen angeordnet als das Geberrad 2 und liegt in axialer Richtung in Überdeckung mit diesem vor.

Das Geberrad 2 verfügt über einen Grundkörper 6, von welchem sechs Indikatorelemente 7, 8, 9, 10, 11 und 12 ausgehen. Jedes der Indikatorelemente 7 bis 12 verfügt jeweils über zwei Flanken 13 und 14, wobei die Flanke 13 als in Drehrichtung vorauslaufende Vorlaufflanke und die Flanke 14 als in Drehrichtung der Vorlaufflanke 13 nachlaufende Nachlaufflanke vorliegt. Die Flanken 13 und 14 sind lediglich beispielhaft für einige der Indikatorelemente 7 bis 12 gezeigt. In Umfangsrichtung zwischen den Indikatorelementen 7 bis 12 liegen Zwischenräume 15, 16, 17, 18, 19 und 20 vor.

Die Indikatorelemente 7 bis 12 sind derart angeordnet, dass ihre Vorlaufflanken 13 in Umfangsrichtung gleichmäßig an dem Grundkörper 6 angeordnet sind. Die Vorlaufflanken 13 weisen insoweit in Umfangsrichtung identische Abstände zueinander auf. Die Indikatorelemente 7 bis 12 weisen jeweils eine Indikatorelementerstreckung in Umfangsrichtung auf. Hierbei liegen drei unterschiedliche Werte für die Indikatorelementerstreckungen vor. In dem hier dargestellten Ausführungsbeispiel sind die Indikatorelemente 7 und 8 mit denselben Indikatorelementerstreckungen ausgestaltet. Weiterhin verfügen die Indikatorelemente 9 und 12 über dieselben Indikatorelementerstreckungen und die Indikatorelemente 10 und 11 ebenfalls. Die Indikatorelemente 7 und 8 bilden hierbei ein Indikatorelementpaar 21 aus in Umfangsrichtung unmittelbar aufeinanderfolgende Indikatorelementen mit denselben Indikatorelementerstreckungen. Die Indikatorelemente 10 und 11 bilden ein weiteres Indikatorelementpaar 22 für die das gleiche gilt.

In dem hier dargestellten Ausführungsbeispiel sind für die drei unterschiedlichen Indikatorelementerstreckungen Ausgangswerte vorgesehen, welche den gleichen Abstand voneinander aufweisen. Beispielsweise betragen die Ausgangswerte 20°, 30° und 40°. Die Ausgangswerte ergeben sich insoweit durch Inkrementieren eines Startwerts, hier 20°, um einen Differenzwert, hier 10°. Die Indikatorelementerstreckungen sind jedoch kleiner als die Ausgangswerte, nämlich jeweils um denselben Offsetwinkel, welcher beispielsweise mindestens 1,6°, mindestens 1,7° oder mindestens 1,8° beträgt. In dem hier dargestellten Ausführungsbeispiel weisen die Indikatorelementerstreckungen die folgenden Werte auf: 18,3°, 28,3° und 38,3°. Alternativ könnten die Indikatorelementerstreckungen auch größer sein als die Ausgangswerte, insbesondere um denselben Offsetwinkel, der einen der vorstehend genannten Werte aufweisen kann. Ebenfalls können die Indikatorelementerstreckungen den Ausgangswerten entsprechend. Die Abweichung ist derart gewählt, um die Differenz eines Sensorwerts zu der Konstruktion zu berücksichtigen.

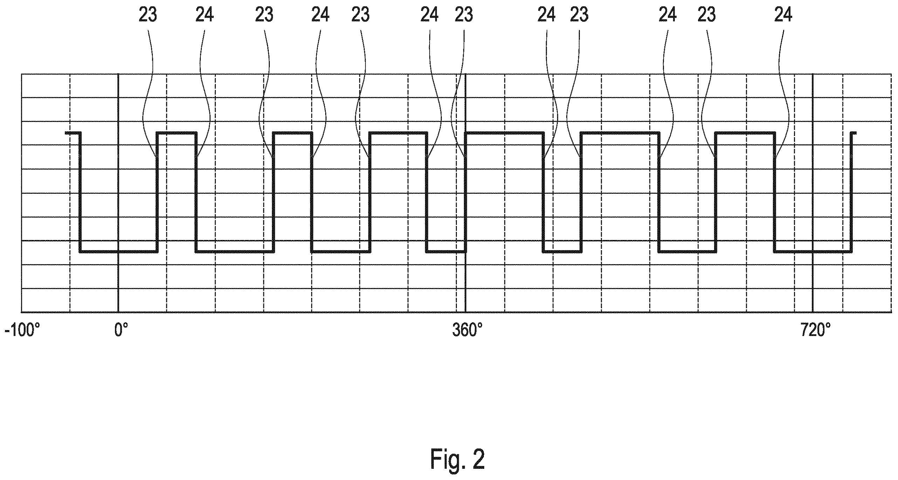

Die Figur 2 zeigt ein Diagramm, in welchem ein Sensorwert des Nockenwellengebersensors 4 über einem Kurbelwellenwinkel einer Kurbelwelle der Brennkraftmaschine aufgetragen ist. Die Kurbelwelle dreht sich mit der doppelten Drehzahl der Nockenwelle 3, sodass sich für eine einzige Umdrehung der Nockenwelle 3 und mithin des Geberrads 2 zwei Umdrehungen der Kurbelwelle ergeben. Das Geberrad 2 ist vorstehend für die Drehwinkelstellung 0° gezeigt. Es ist erkennbar, dass im Falle einer Überdeckung eines der Indikatorelemente 7 bis 12 und des Nockenwellengebersensors 4 ein erster Signalpegel und im Falle einer Überdeckung zwischen einem der Zwischenräume 15 bis 20 und dem Nockenwellengebersensor 4 ein zweiter Signalpegel vorliegt, wobei der erste Signalpegel kleiner ist als der zweite Signalpegel.

Für eine ganze Umdrehung des Geberrads 2 liegen eine Vielzahl von Signalflanken 23 und 24 auf, wobei die Signalflanken 23 steigende Signalflanken und die Signalflanken 24 fallende Signalflanken sind. Diese sind hier rein beispielhaft angedeutet. Es ist erkennbar, dass mithilfe des Signals des Nockenwellengebersensors 4 eine absolute Drehwinkelstellung des Geberrads 2 der Nockenwelle 3 rasch ermittelt werden kann. Gleichzeitig ist aufgrund der gleichmäßigen Anordnung der fallenden Flanken 24 eine kontinuierliche und gleichmäßige Ermittlung der Drehwinkelstellung realisiert. Eine unmittelbare Bestimmung der absoluten Drehwinkelstellung des Geberrads 2 ist insbesondere ausgehend von 0° und ausgehend von 360° möglich. Ebenso bei einem Durchlauf von 360° und 720°. Die beschriebene Ausgestaltung der Brennkraftmaschine 1 beziehungsweise des Geberrads 2 ermöglicht insoweit eine rasche und genaue Ermittlung der absoluten Drehwinkelstellung der Nockenwelle 3.

### BEZUGSZEICHENLISTE:

- 1: Brennkraftmaschine
- 2: Geberrad
- 3: Nockenwelle
- 4: Nockenwellengebersensor
- 5: Pfeil
- 6: Grundkörper
- 7: Indikatorelement
- 8: Indikatorelement
- 9: Indikatorelement
- 10: Indikatorelement
- 11: Indikatorelement
- 12: Indikatorelement
- 13: Flanke
- 14: Flanke
- 15: Zwischenraum
- 16: Zwischenraum
- 17: Zwischenraum
- 18: Zwischenraum
- 19: Zwischenraum
- 20: Zwischenraum
- 21: Indikatorelementpaar
- 22: Indikatorelementpaar
- 23: Flanke
- 24: Flanke

## Patentansprüche

1. Geberrad (2) für eine Brennkraftmaschine (1), mit sechs Indikatorelementen (7, 8, 9, 10, 11, 12), die in Umfangsrichtung bezüglich einer Drehachse des Geberrads (2) beabstandet voneinander an einem Grundkörper (6) des Geberrads (2) angeordnet sind, wobei gleichsinnig angeordnete Flanken (13, 14) der Indikatorelemente (7, 8, 9, 10, 11, 12) in Umfangsrichtung äquidistant zueinander angeordnet sind, wobei die Indikatorelemente (7, 8, 9, 10, 11, 12) jeweils eine von drei unterschiedlichen Indikatorelementerstreckungen in Umfangsrichtung aufweisen, wobei jeweils zwei der Indikatorelemente (7, 8, 9, 10, 11, 12) dieselbe der Indikatorelementerstreckungen aufweisen, **dadurch gekennzeichnet, dass** zumindest zwei unmittelbar benachbarte der Indikatorelemente (7, 8, 9, 10, 11, 12) ein Indikatorelementpaar (21, 22) bilden und dieselbe der Indikatorelementerstreckungen aufweisen.

2. Geberrad nach Anspruch 1, **dadurch gekennzeichnet, dass** jedes der Indikatorelemente (7, 8, 9, 10, 11, 12) eine in Drehrichtung vorauslaufende Vorlaufflanke (13) und eine in Drehrichtung nachlaufende Nachlaufflanke (14) aufweist und die äquidistant angeordneten Flanken (13, 14) die Vorlaufflanken (13) sind.

3. Geberrad nach einem der vorhergehenden Ansprüche, **dadurch gekennzeichnet, dass** die Indikatorelemente (7, 8, 9, 10, 11, 12) in Umfangsrichtung an den folgenden Winkelpositionen ihre jeweilige Vorlaufflanke (13) aufweisen: 0°, 60°, 120°, 180°, 240° und 300°, und dass die Indikatorelemente (7, 8, 9, 10, 11, 12) In Umfangsrichtung gesehen die folgenden Indikatorelementerstreckungen aufweisen: 40°, 40°, 30°, 20°, 20°, 30°.

4. Geberrad nach Anspruch 3, **dadurch gekennzeichnet, dass** die Indikatorelementerstreckungen der Indikatorelemente (7, 8, 9, 10, 11, 12) jeweils um denselben Offsetwinkel verkleinert sind.

5. Brennkraftmaschine (1), mit einer Kurbelwelle und einer antriebstechnisch an die Kurbelwelle angeschlossenen Nockenwelle (3), wobei mit der Kurbelwelle ein mehrere Indikatorelemente aufweisendes Kurbelwellengeberrad und mit der Nockenwelle (3) ein sechs Indikatorelemente (7, 8, 9, 10, 11, 12) aufweisendes und als Nockenwellengeberrad ausgestaltetes Geberrad (2) nach einem oder mehreren der vorhergehenden Ansprüche, drehfest gekoppelt ist, und wobei die Brennkraftmaschine (1) einen Kurbelwellengebersensor zur Erfassung der Indikatorelemente des Kurbelwellengeberrads und einen Nockenwellengebersensor (4) zur Erfassung der Indikatorelemente (7, 8, 9, 10, 11, 12) des Nockenwellengeberrads (2) aufweist, wobei gleichsinnig angeordnete Flanken (13,14) der Indikatorelemente (7, 8, 9, 10, 11, 12) in Umfangsrichtung äquidistant zueinander angeordnet sind, wobei die Indikatorelemente (7, 8, 9, 10, 11, 12) des Nockenwellengeberrads (2) jeweils eine von drei unterschiedlichen Erstreckungen in Umfangsrichtung aufweisen, wobei jeweils zwei der Indikatorelemente (7, 8, 9, 10, 11, 12) dieselbe der Indikatorelementerstreckungen aufweisen, **dadurch gekennzeichnet, dass** zumindest zwei unmittelbar benachbarte der Indikatorelemente (7, 8, 9, 10, 11, 12) ein Indikatorelementpaar (21, 22) bilden und dieselbe der Indikatorelementerstreckungen aufweisen.

6. Brennkraftmaschine nach Anspruch 5, **dadurch gekennzeichnet, dass** der Nockenwellengebersensor (4) dazu vorgesehen und ausgebildet ist, bei Überdeckung mit einem der Indikatorelemente (7, 8, 9, 10, 11, 12) einen ersten Signalpegel und bei Überdeckung mit einem der zwischen den Indikatorelementen (7, 8, 9, 10, 11, 12) vorliegenden Zwischenräume (15, 16, 17, 18, 19, 20) einen von dem ersten Signalpegel verschiedenen zweiten Signalpegel zu generieren.

7. Verfahren zum Betreiben einer Brennkraftmaschine (1), insbesondere einer Brennkraftmaschine (1) nach einem oder mehreren der vorhergehenden Ansprüche, wobei die Brennkraftmaschine (1) über eine Kurbelwelle und eine antriebstechnisch an die Kurbelwelle angeschlossenen Nockenwelle (3) verfügt, wobei mit der Kurbelwelle ein mehrere Indikatorelemente aufweisendes Kurbelwellengeberrad und mit der Nockenwelle (3) ein sechs Indikatorelemente (7, 8, 9, 10, 11, 12) aufweisendes und als Nockenwellengeberrad ausgestaltetes Geberrad (2) drehfest gekoppelt ist, und wobei die Brennkraftmaschine (1) mittels eines Kurbelwellengebersensors die Indikatorelemente des Kurbelwellengeberrads und mittels eines Nockenwellengebersensors (4) die Indikatorelemente (7, 8, 9, 10, 11, 12) des Nockenwellengeberrads (2) erfasst, wobei gleichsinnig angeordnete Flanken (13,14) der Indikatorelemente (7, 8, 9, 10, 11, 12) In Umfangsrichtung äquidistant zueinander angeordnet sind, wobei die Indikatorelemente (7, 8, 9, 10, 11, 12) des Nockenwellengeberrads (2) jeweils eine von drei unterschiedlichen Erstreckungen in Umfangsrichtung aufweisen, wobei jeweils zwei der Indikatorelemente (7, 8, 9, 10, 11, 12) dieselbe der Indikatorelementerstreckungen aufweisen, **dadurch gekennzeichnet, dass** zumindest zwei unmittelbar benachbarte der Indikatorelemente (7, 8, 9, 10, 11, 12) ein Indikatorelementpaar (21, 22) bilden und dieselbe der Indikatorelementerstreckungen aufweisen.

## Claims

1. Encoder wheel (2) for an internal combustion engine (1), having six indicator elements (7, 8, 9, 10, 11, 12), which are arranged spaced apart from one another in the circumferential direction with respect to a rotational axis of the encoder wheel (2) on a main body (6) of the encoder wheel (2), wherein flanks (13, 14) arranged in the same direction of the indicator elements (7, 8, 9, 10, 11, 12) are arranged equidistantly to one another in the circumferential direction, wherein the indicator elements (7, 8, 9, 10, 11, 12) each comprise one of three different indicator element extensions in the circumferential direction, wherein in each case two of the indicator elements (7, 8, 9, 10, 11, 12) comprise the same of the indicator element extensions, **characterized in that** at least two directly adjacent ones of the indicator elements (7, 8, 9, 10, 11, 12) form an indicator element pair (21, 22) and comprise the same indicator element extensions.

2. Encoder wheel according to claim 1, **characterized in that** each of the indicator elements (7, 8, 9, 10, 11, 12) comprises a leading flank (13) leading in the rotational direction and a trailing flank (14) trailing in the rotational direction and the equidistantly arranged flanks (13, 14) are the leading flanks (13).

3. Encoder wheel according to any one of the preceding claims, **characterized in that** the indicator elements (7, 8, 9, 10, 11, 12) comprise their respective leading flank (13) in the circumferential direction at the following angular positions: 0°, 60°, 120°, 180°, to 240°, and 300°, and that the indicator elements (7, 8, 9, 10, 11, 12) comprise the following indicator element extensions viewed in the circumferential direction: 40°, 40°, 30°, 20°, 20°, 30°.

4. Encoder wheel according to claim 3, **characterized in that** the indicator element extensions of the indicator elements (7, 8, 9, 10, 11, 12) are each reduced by the same offset angle.

5. Internal combustion engine (1), having a crankshaft and a camshaft (3) connected to the crankshaft in terms of drive, wherein a crankshaft encoder wheel including multiple indicator elements is coupled in a rotationally-fixed manner to the crankshaft and an encoder wheel (2) including six indicator elements (7, 8, 9, 10, 11, 12) according to one or more of the preceding claims and designed as a camshaft encoder wheel is coupled in a rotationally-fixed manner to the camshaft (3), and wherein the internal combustion engine (1) includes a crankshaft encoder sensor for sensing the indicator elements of the crankshaft encoder wheel and a camshaft encoder sensor (4) for sensing the indicator elements (7, 8, 9, 10, 11, 12) of the camshaft encoder wheel (2), wherein flanks (13, 14) arranged in the same direction of the indicator elements (7, 8, 9, 10, 11, 12) are arranged equidistantly to one another in the circumferential direction, wherein the indicator elements (7, 8, 9, 10, 11, 12) of the camshaft encoder wheel (2) each comprise one of three different extensions in the circumferential direction, wherein in each case two of the indicator elements (7, 8, 9, 10, 11, 12) comprise the same of the indicator element extensions, **characterized in that** at least two directly adjacent ones of the indicator elements (7, 8, 9, 10, 11, 12) form an indicator element pair (21, 22) and comprise the same indicator element extensions.

6. Internal combustion according to claim 5, **characterized in that** the camshaft encoder sensor (4) is provided and designed to generate a first signal level upon overlap with one of the indicator elements (7, 8, 9, 10, 11, 12) and to generate a second signal level different from the first signal level upon overlap with one of the intermediate spaces (15, 16, 17, 18, 19, 20) present between the indicator elements (7, 8, 9, 10, 11, 12).

7. Method for operating an internal combustion engine (1), in particular an internal combustion engine (1) as claimed in any one or more of the preceding claims, wherein the internal combustion engine (1) has a crankshaft and a camshaft (3) connected in terms of drive to the crankshaft, wherein a crankshaft encoder wheel including multiple indicator elements is coupled in a rotationally-fixed manner to the crankshaft and an encoder wheel (2) including six indicator elements (7, 8, 9, 10, 11, 12) and designed as a camshaft encoder wheel is coupled in a rotationally-fixed manner to the camshaft (3), and wherein the internal combustion engine (1) senses the indicator elements of the crankshaft encoder wheel by means of a crankshaft encoder sensor and senses the indicator elements (7, 8, 9, 10, 11, 12) of the camshaft encoder wheel (2) by means of a camshaft encoder sensor (4), wherein flanks (13, 14) arranged in the same direction of the indicator elements (7, 8, 9, 10, 11, 12) are arranged equidistantly to one another in the circumferential direction, wherein the indicator elements (7, 8, 9, 10, 11, 12) of the camshaft encoder wheel (2) each comprise one of three different extensions in the circumferential direction, wherein in each case two of the indicator elements (7, 8, 9, 10, 11, 12) comprise the same of the indicator element extensions, **characterized in that** at least two directly adjacent ones of the indicator elements (7, 8, 9, 10, 11, 12) form an indicator element pair (21, 22) and comprise the same indicator element extensions.

## Revendications

1. Roue de capteur (2) pour un moteur à combustion interne (1), avec six éléments indicateurs (7, 8, 9, 10, 11, 12) qui sont disposés à distance les uns des autres dans le sens circonférentiel par rapport à un axe de rotation de la roue de capteur (2) sur un corps de base (6) de la roue de capteur (2), dans laquelle des flancs (13, 14), disposés dans le même sens, des éléments indicateurs (7, 8, 9, 10, 11, 12) sont disposés mutuellement d'une manière équidistante dans le sens circonférentiel, dans laquelle les éléments indicateurs (7, 8, 9, 10, 11, 12) présentent à chaque fois une de trois extensions d'élément indicateur différentes dans le sens circonférentiel, dans laquelle à chaque fois deux des éléments indicateurs (7, 8, 9, 10, 11, 12) présentent la même des extensions d'élément indicateur, **caractérisée en ce qu'**au moins deux des éléments indicateurs (7, 8, 9, 10, 11, 12), directement contigus, forment une paire d'éléments indicateurs (21, 22) et présentent la même des extensions d'élément indicateur.

2. Roue de capteur selon la revendication 1, **caractérisée en ce que** chacun des éléments indicateurs (7, 8, 9, 10, 11, 12) présente un flanc d'attaque (13) en amont dans le sens de rotation et un flanc terminal (14) en aval dans le sens de rotation et les flancs (13, 14) disposés d'une manière équidistante sont les flancs d'attaque (13).

3. Roue de capteur selon l'une des revendications précédentes, **caractérisée en ce que** les éléments indicateurs (7, 8, 9, 10, 11, 12) présentent dans le sens circonférentiel leur flanc d'attaque respectif (13) aux positions angulaires suivantes : 0°, 60°, 120°, 180°, 240° et 300°, et **en ce que** les éléments indicateurs (7, 8, 9, 10, 11, 12) vus dans le sens circonférentiel présentent les extensions d'élément indicateur suivantes : 40°, 40°, 30°, 20°, 20°, 30°.

4. Roue de capteur selon la revendication 3, **caractérisée en ce que** les extensions d'élément indicateur des éléments indicateurs (7, 8, 9, 10, 11, 12) sont réduites à chaque fois du même angle de décalage.

5. Moteur à combustion interne (1), avec un vilebrequin et un arbre à cames (3) raccordé au vilebrequin, dans lequel est couplée en rotation au vilebrequin une roue de capteur de vilebrequin présentant plusieurs éléments indicateurs et à l'arbre à cames (3) une roue de capteur (2) présentant six éléments indicateurs (7, 8, 9, 10, 11, 12) et configurée comme roue de capteur d'arbre à cames selon l'une ou plusieurs des revendications précédentes, et dans lequel le moteur à combustion interne (1) présente un capteur de vilebrequin pour détecter des éléments indicateurs de la roue de capteur de vilebrequin et un capteur d'arbre à cames (4) pour détecter les éléments indicateurs (7, 8, 9, 10, 11, 12) de la roue de capteur d'arbre à cames (2), dans lequel des flancs (13, 14), disposés dans le même sens, des éléments indicateurs (7, 8, 9, 10, 11, 12) sont disposés mutuellement d'une manière équidistante dans le sens circonférentiel, dans lequel les éléments indicateurs (7, 8, 9, 10, 11, 12) de la roue de capteur d'arbre à cames (2) présentent à chaque fois une de trois extensions différentes dans le sens circonférentiel, dans lequel à chaque fois deux des éléments indicateurs (7, 8, 9, 10, 11, 12) présentent la même des extensions d'élément indicateur, **caractérisé en ce qu'**au moins deux des éléments indicateurs (7, 8, 9, 10, 11, 12), directement contigus, forment une paire d'éléments indicateurs (21, 22) et présentent la même des extensions d'élément indicateur.

6. Moteur à combustion interne selon la revendication 5, **caractérisé en ce que** le capteur d'arbre à cames (4) est prévu et conçu pour générer, lors du recouvrement avec l'un des éléments indicateurs (7, 8, 9, 10, 11, 12), un premier niveau de signal et, lors du recouvrement avec l'un des intervalles (15, 16, 17, 18, 19, 20) existant entre les éléments indicateurs (7, 8, 9, 10, 11, 12), un deuxième niveau de signal différent du premier niveau de signal.

7. Procédé de fonctionnement d'un moteur à combustion interne (1), plus particulièrement d'un moteur à combustion interne (1) selon l'une ou plusieurs des revendications précédentes, dans lequel le moteur à combustion interne (1) dispose d'un vilebrequin et d'un arbre à cames (3) raccordé en termes d'entraînement au vilebrequin, dans lequel est couplée en rotation au vilebrequin une roue de capteur de vilebrequin présentant plusieurs éléments indicateurs et à l'arbre à cames (3) une roue de capteur (2) présentant six éléments indicateurs (7, 8, 9, 10, 11, 12) et configurée comme roue de capteur d'arbre à cames, et dans lequel le moteur à combustion interne (1) saisit, au moyen d'un capteur de vilebrequin, les éléments indicateurs de la roue de capteur de vilebrequin et au moyen d'un capteur d'arbre à cames (4), les éléments indicateurs (7, 8, 9, 10, 11, 12) de la roue de capteur d'arbre à cames (2), dans lequel des flancs (13, 14) disposés dans le même sens des éléments indicateurs (7, 8, 9, 10, 11, 12) sont disposés mutuellement d'une manière équidistante dans le sens circonférentiel, dans lequel les éléments indicateurs (7, 8, 9, 10, 11, 12) de la roue de capteur d'arbre à cames (2) présentent à chaque fois une de trois extensions différentes dans le sens circonférentiel, dans lequel à chaque fois deux des éléments indicateurs (7, 8, 9, 10, 11, 12) présentent la même des extensions d'élément indicateur, **caractérisé en ce qu'**au moins deux des éléments indicateurs (7, 8, 9, 10, 11, 12), directement contigus, forment une paire d'éléments indicateurs (21, 22) et présentent la même des extensions d'élément indicateur.
